Europäisches Patentamt

European Patent Office

Office européen des brevets

(19)

(11) EP 0 626 091 B1

(12)

# EUROPEAN PATENT SPECIFICATION

(45) Date of publication and mention
of the grant of the patent:
**11.12.1996 Bulletin 1996/50**

(21) Application number: **93903655.4**

(22) Date of filing: **22.01.1993**

(51) Int Cl.6: **G11B 5/704**

(86) International application number:
**PCT/US93/00613**

(87) International publication number:
**WO 93/16466 (19.08.1993 Gazette 1993/20)**

(54) **MAGNETIC RECORDING MEDIUM WITH BUMPY BACKSIDE COATING DERIVED FROM BLOCK COPOLYMERS**

Magnetischer Aufzeichnungsträger mit zerfurchter rückseitiger Beschichtung aus Blockpolymeren

SUPPORT D'ENREGISTREMENT MAGNETIQUE DOTE SUR SA FACE ARRIERE D'UN REVETEMENT RUGUEUX DERIVE DE COPOLYMERES EN BLOCS

(84) Designated Contracting States:
**DE GB NL**

(30) Priority: **10.02.1992 US 833354**
**21.12.1992 US 994102**

(43) Date of publication of application:
**30.11.1994 Bulletin 1994/48**

(73) Proprietor: **MINNESOTA MINING AND MANUFACTURING COMPANY**
**St. Paul, Minnesota 55133-3427 (US)**

(72) Inventors:
• **BENGTSON, Bruce, H.**
**Saint Paul, MN 55133-3427 (US)**
• **SEHON, Russell, D.**
**Saint Paul, MN 55133-3427 (US)**
• **EVANS, Christopher, M.**
**Saint Paul, MN 55133-3427 (US)**
• **NORMAN, Colin, F., W.**
**Saint Paul, MN 55133-3427 (US)**

(74) Representative: **Warcoin, Jacques et al**
**Cabinet Régimbeau,**
**26, avenue Kléber**
**75116 Paris (FR)**

(56) References cited:
**EP-A- 0 464 827**

## Description

FIELD OF THE INVENTION

The present invention relates to magnetic recording media and particularly to improved magnetic recording media comprising a backside coating derived from high molecular weight block copolymers.

BACKGROUND OF THE INVENTION

Flexible magnetic recording media generally comprise a magnetic coating supported upon a nonmagnetic support. The quality of magnetically recorded and reproduced signals depends upon precise, accurate tracking of the media during transport (i.e., during playback, recording, fast forward, and rewind). Any irregularities in tracking will adversely affect the recording and reproduction of magnetically recorded signals. Additionally, magnetic recording media must be durable so that it is possible to record and play back information repeatedly. In view of these concerns, a backside coating may also be applied to the nonmagnetic support in order to improve the conductivity, durability, and tracking characteristics of the media.

One factor affecting tracking characteristics relates to the surface roughness of the backside coating. If the surface is too smooth, air tends to become trapped under the magnetic recording medium as it moves. When this happens, tracking is difficult to control, because the entrapped air causes the tension of the medium to vary considerably. Tape slippage usually results. To avoid this problem, the surface of backside coatings are made with a rough texture to allow air to escape from under the moving tape.

For example, US-A-4,328,935 describes a backside coating whose surface has a rough texture. This rough texture is achieved through the use of relatively large, "equant" particles. However, using large particles to achieve a rough texture has disadvantages. In particular, the relatively large particles tend to press into the magnetic coating, leaving indentations in the magnetic coating when the medium is subsequently surface treated and/or stored as a roll or wound on a reel. As a result, those electromagnetic properties of the media which depend upon the smoothness of the magnetic coating, e.g., the signal to noise ratio, sensitivity, maximum output level, and the like tend to deteriorate.

US-A-4,645,723 describes a backside coating having a rough texture, but does not use relatively large particles to achieve such texture. Rather, the backside coating is produced from a solution of two or more binder components, which are incompatible with one another, in a solvent mixture. The solvent mixture consists of two or more solvents which boil at different temperatures, wherein the binder components are insoluble in the higher boiling solvent. When the solution is dried, the binder components precipitate from solution and separate. According to the patent, this results in a coating whose surface has a rough texture. However, this approach has disadvantages. The use of two binder components increases the chance for mischarges during the manufacturing process. Additionally, the blend of two incompatible components may provide a matrix with poor durability.

Because magnetic recording media are often exposed to a wide range of temperatures, one factor affecting the durability of the backside coating relates to maintaining uniform physical properties over a wide temperature range. Unfortunately, many of the known backside binder materials experience changes in physical properties with changes in temperature. In extreme cases, a backside coating material can go from a stiff, brittle material to a soft, tacky material as the temperature is increased. Such changes in physical properties can reduce the durability of the backside coating. Other problems encountered by using conventional backside coating materials known in the prior art include hydrolysis of the backside coating material and degradation of the backside coating material by humidity.

A majority of conventional backside coatings are derived from relatively low molecular weight starting materials. Such low molecular weight materials require curing, i.e., crosslinking, to generate a backside coating having the appropriate physical properties. For example, backside coatings have been generally prepared by coating an uncured pre-polymer solution onto the nonmagnetic substrate. The pre-polymer solution is then dried and cured to provide a tough, durable backside coating. In order to cure the pre-polymer material, most conventional materials rely upon a chemical reaction between a polyisocyanate cross-linking agent and hydroxy functionality on the pre-polymer. The cross-linking agent is typically added to the pre-polymer solution just prior to coating.

However, the need for a chemical curing step complicates and thus increases the cost of magnetic recording media production. Additionally, after the cross-linking agent has been added to the pre-polymer solution, the viscosity of the solution gradually increases as cross-linking reactions take place. After a certain period of time, the viscosity of the solution becomes sufficiently high such that it is then extremely difficult to coat the solution onto the substrate. Consequently, the pre-polymer solution has a finite pot life after addition of the cross-linking agent. The finite pot life of the pre-polymer solution raises a number of concerns. If the cure reaction is too fast, the resulting short pot life imposes time constraints upon the coating process and makes it more difficult to obtain uniform backside coatings. On the other hand, if the cure reaction is too slow, the backside coating will have poor green strength until the cure reaction has progressed sufficiently. As a result, the backside coating will be susceptible to damage during subsequent processing steps unless an inconvenient and expensive time delay is built into the manufacturing process.

In addition to the pot life considerations discussed above, the use of curable low molecular weight starting materials can cause other problems. If the cure reaction, for any reason, is incomplete, then low molecular weight materials will remain in the backside coating. Such low molecular weight materials can plasticize the backside coating, thus reducing the durability of the backside coating. Moreover, the low molecular weight materials tend to migrate to the surface of the backside coating. Such migration can cause increased friction, stiction, head clogging, and/or poor blocking resistance.

Magnetic recording media incorporating block copolymers have been known. For example, US-A-5,128,215 describes magnetic recording media whose magnetic layers include a block copolymer. Similarly, US-A-4,448,846; 3,975,569; and 3,929,659 describe the use of random styrene-diene copolymers as a component of the binder matrix in magnetic recording media.

EP-A-0464827 discloses a magnetic recording medium having a backside coating composition comprising a polyurethane, carbon powder, and inorganic abrasive pigment .

## SUMMARY OF THE INVENTION

The present invention provides an improved magnetic recording medium comprising a nonmagnetic support having opposed first and second major surfaces, a magnetizable coating on said first major surface, and a backside coating on said second major surface. The backside coating has a plurality of protuberances and comprises a block copolymer having the general formula :

$$(A\text{-}B)_n\text{-}Y,$$

wherein :

Y is a multifunctional coupling moiety ;
n has a number average value of 2 to 15 ;
A is a polymeric block having a $T_g$ of greater than about 70°C; and B is a polymeric block having a $T_g$ of less than about 25°C, $T_g$ being measured by differential scanning calorimetry, the molecular weight of A is in the range of 10 000 to 70 000 ; the molecular weight of B is in the range of 15 000 to 75 000 ; each (A-B) contains 30 to 80 % by weight A ;
and A and B blocks phase separate when free of solvent and said protuberances are formed from portions of the block copolymer.

The plurality of protuberances are integral with the block copolymer and impart a rough texture to the surface of the backside coating.

"$T_g$", the glass transition temperature, means the temperature at which the polymer changes from a hard, glassy material to a rubbery, or viscous, material. In the practice of the present invention, values for $T_g$ are measured according to the differential scanning calorimetry technique. This technique is described, for example, in Allcock and Lampe, <u>Contemporary Polymer Chemistry,</u> pp. 436-437 (1981) ; Wunderlich and Gaur, "Differential Scanning Calorimetry of Flexible, Linear Macromolecules", <u>Polymer Characterization : Spectroscopie Chromatographic and Physical Instrument Methods</u>, pp. 195-199 (1983) ; Rodriguez, <u>Principles of Polymer Systems,</u> 2d edition, pp. 486-488 (1982).

The term "integral" with respect to the protuberances means that the protuberances are formed from portions of the block copolymer.

The term "incompatible" means that the A and B blocks phase separate when free of solvent.

The backside coating of the present invention achieves a rough textured surface for reducing air entrapment during tape transport without resort to using relatively large particles to achieve such texture. As a result, it is believed that the backside coating of the present invention would show less of a tendency to damage the magnetic layer when the magnetic recording medium is stored as a roll.

The block copolymers of the present invention have a number of other characteristics that make them especially well-suited for use in the backside coatings of magnetic recording media. For example, the block copolymers of the present invention are tailored to have relatively stable physical properties over a wide range of temperatures by careful selection of the polymeric segment (A) and the polymeric segment (B). By choosing A having a relatively high $T_g$ and choosing B having a relatively low $T_g$, the resulting block copolymer will show substantially uniform physical properties between the two glass transition temperatures. For example, if A has a $T_g$ of at least 70°C and B has a $T_g$ of no more than 25°C, the resulting block copolymer would show substantially uniform physical properties in a temperature range from 25°C to 70°C.

Additionally, the block copolymers of the present invention, when dried, behave as if they are crosslinked but still retain the solubility and melt-processing characteristics of a thermoplastic. The crosslinking effect is caused by the separation of the A and B blocks into separate domains. Such phase separation has been referred to in the art as "physical crosslinking," which makes chemical curing of the backside coating unnecessary. This feature of the invention avoids problems associated with the cure reaction, such as pot life constraints, processing delays, and the like. Moreover, a single backside coating material may be used in the practice of the present invention instead of the two component backside coating systems used in most commercially available magnetic recording media. Use of a single backside coating material reduces the chances for mischarges that might otherwise occur during the manufacturing process. In preferred embodiments of the invention, the use of relatively high molecular weight block copolymers also avoids those problems associated with lower molecular weight starting materials.

Preferred backside coatings of the present invention may also show improved environmental stability. By choosing A and B so that the hydrocarbon backbone of the block copolymer has no heteroatoms, it is believed that the resulting block copolymer would not be subject to hydrolysis.

## BRIEF DESCRIPTION OF THE DRAWINGS

FIG. 1 is an optical photomicrograph showing a backside coating of the present invention at a magnification of 100X.
FIG. 2 is an optical photomicrograph showing a backside coating of the present invention at a magnification of 100X.
FIG. 3 is an optical photomicrograph showing a backside coating of the present invention at a magnification of 100X.

## DESCRIPTION OF THE PREFERRED EMBODIMENTS

The nonmagnetic support of the present invention may be any suitable substrate material known in the art. Examples of suitable substrate materials include, for example, polyesters such as polyethylene terephthalate ("PET"); polyolefins such as polypropylene; cellulose derivatives such as cellulose triacetate or cellulose diacetate; polymers such as polycarbonate, polyvinyl chloride, polyimide, polyphenylene sulfide, polyacrylate, polyether sulphone, polyether ether ketone, polyetherimide, polysulphone, aramid film, polyethylene 2, 6-naphthalate film, fluorinated polymer, liquid crystal polyesters, polyamide, or polyhydric acid; paper; or any other suitable material.

The particular magnetic coating used in the practice of the present invention is not critical and may be any suitable magnetic coating known in the art. For example, the magnetic coating may be a thin film magnetic coating deposited onto the nonmagnetic support using the various chemical and physical vapor deposition techniques. As another alternative, the magnetic coating may comprise magnetic pigment particles dispersed in a polymeric binder.

The backside coatings of the present invention comprise a block copolymer represented by the formula

$$(A\text{-}B)_n\text{-}Y \, ,$$

wherein the segment, A, has a $T_g$ of greater than about 70°C, preferably greater than about 80°C, and more preferably greater than about 90°C. The segment, A, is preferably a segment derived from a vinyl substituted aromatic monomer. Examples of vinyl substituted aromatic monomers suitable in the practice of the invention include styrene; 3-methylstyrene; 4-methylstyrene; 4-isopropylstyrene; 2-ethyl-4-benzylstyrene; 4-p-tolylstyrene; 4(4-phenyl-n-butyl)styrene; 2,4-dimethylstyrene; 2,4,6-trimethylstyrene; 3-methyl-5-n-hexylstyrene; sulfonated styrene; 1-vinylnaphthalene; 2-vinylnaphthalene; the alkyl, cycloalkyl, aryl, alkaryl, and aralkyl derivatives of vinylnaphthalene; vinyl pyridines, and the like. Of these materials, the use of styrene is most preferred.

The soft segment, B, has a $T_g$ of less than about 25°C, preferably less than about 0°C, and more preferably less than about -30°C. The soft segment, B, is preferably a segment derived from a diene monomer having from 4 to 12 carbon atoms, and more preferably a conjugated diene monomer having from 4 to 12 carbon atoms. Examples of dienes that are suitable in the practice of the present invention include 1,3-butadiene, isoprene, 1,3- pentadiene (piperylene), 2,3-dimethyl-1,3-butadiene, 3-butyl-1,3-octadiene, 1-phenyl-1,3 butadiene, 1,3-hexadiene, 1,3-octadiene, 4-ethyl-1,3-hexadiene, and the like. The use of a butadiene or isoprene is preferred.

The manufacture of block copolymers is well known in the art. Typical methods of making block copolymers are described in U.S. Pat. No. 4,780,367; U.S. Pat. No. 3,985,830; Fetters, L. J., J. Polymer Sci: Part C, No. 26, pages 1-35 (1969); McGrath, J. E., editor, Anionic Polymerization: Kinetics. Mechanisms, and Synthesis, ACS Symposium Series, pages 41-47 (1981); and Legge, N. R., et al., editor, Thermoplastic Elastomers: a Comprehensive Review, pages 67-71 and 466-471 (1987). For example, the hard segment, A, may be synthesized as follows:

$$A^* + A \rightarrow AA^*$$

An AB block can be constructed by adding B to an AA∗ chain as follows:

$$AA^* + B \rightarrow (A\text{-}B)\text{-}$$

According to the present invention, each arm, (A-B)-, preferably has a number average molecular weight that is high enough to allow for steric interaction between adjacent block copolymer molecules. Preferably, each arm, (A-B)-, has a number average molecular weight of at least about 30,000. However, the number average molecular weight of each arm, (A-B)-, is preferably less than about 100,000 so that solutions of the block copolymer do not become too viscous. Preferably, each arm, (A-B)-, has a number average molecular weight of from 45,000 to 80,000. The polydispersity, i.e., the molecular weight distribution of the arms, (A-B)-, is generally less than 1.5, and preferably less than 1.2 as measured by gel permeation chromatography.

Preferably, each of the segments A and B has a molecular weight that is sufficiently high such that the A and B segments form separate domains. If either of the segments A or B has a molecular weight that is too low, phase separation may not occur. For preferred, relatively high molecular weight block copolymers of the present invention, the hard segment, A, has a molecular weight of from about 10,000 to 70,000, and the soft segment, B, has a molecular weight of from about 15,000 to 75,000.

In preferred embodiments, each arm, (A-B)-, contains from 30 to 80, preferably 40 to 70, and more preferably 60 to 70, percent by weight of the hard segment, A. If too little of the hard segment, A, is present, then the block copolymer will be too rubbery. On the other hand, if too much of the hard segment, A, is present, then the resulting backside coating made from the block copolymer may be too rigid.

A multifunctional coupling agent is reacted with the (A-B)- arms to form copolymers having the claimed block configuration in which a plurality of (A-B)- arms are linked by a multifunctional coupling moiety, Y. The structure of Y is determined by the kind of multifunctional coupling agent that is used. Preferably, however, the multifunctional coupling moiety, Y, is at least tri-functional.

The particular multifunctional coupling agent used is not critical and may be any of the known multifunctional coupling materials. Examples of multifunctional coupling agents suitable in the practice of the present invention include polyepoxides, polyisocyanates, polyanhydrides, dicarboxylic acid esters, silicon halides, alkyl halides, and divinylbenzene. Particular examples of preferred multifunctional coupling agents include divinylbenzene, silicon tetrachloride and ethylene dibromide. Of these materials, divinylbenzene ("DVB") is preferred. See, e.g., U.S. Pat. No. 3,985,830.

A preferred DVB is commercially available from Dow Chemical Co. as DVB-55. DVB-55 typically comprises 55.8% divinylbenzene, 43.0% ethylvinylbenzene, 0.5% diethylbenzene, 0.7% napthalene, and 900 to 1100 ppm t-butyl catechol inhibitor. The meta:para isomer ratio for both the divinylbenzene and the ethylvinylbenzene ratio is 2.3. A high purity DVB commercially available from Dow Chemical Co. as DVB-HP may also be used in the practice of the present invention. DVB-HP typically comprises 80.5% divinylbenzene, 18.3% ethylvinylbenzene, 0.2% diethylbenzene, 1.0% napthalene, and 900 to 1100 ppm t-butyl catechol inhibitor. The meta:para isomer ratio for both the divinylbenzene and the ethylvinylbenzene ratio is 2.3.

Generally, the multifunctional coupling agent is used in a quantity such that the mole equivalent ratio of coupling moiety to (A-B)- arms is from 3:1 to 20:1, preferably from 4:1 to 12:1, and more preferably about 4.5:1. In this way, the block copolymers of the present invention have a number, n, of arms, (A-B)-, such that each block copolymer comprises from 3 to 20, more preferably from 4 to 12, and more preferably about 8, arms linked to the multifunctional coupling moiety. The coupling moiety is present in such a small weight proportion relative to the total weight of the block copolymer that the weight percent of the coupling moiety in the block copolymer is negligible.

In practice, backside coatings of the present invention comprise a heterogeneous population of block copolymers such that the number of arms, n, has a number average value for the population as a whole. According to one procedure, the average number of arms for a population of block copolymers is measured by size exclusion chromatography with low angle laser light-scattering detection (SEC/LALLS). The SEC/LALLS procedure is described in R.C. Jordan et al., "Size Exclusion Chromatography with Low-Angle Laser Light-Scattering Detection", ACS Symposium Series, No. 245, 1984.

The block copolymers of the present invention may be hydrogenated after formation in order to substantially remove any remaining unsaturation. Such hydrogenation helps to prevent undesirable chemical cross-linking and scission reactions that otherwise might occur. Methods of hydrogenation are well known and are described, for example, in U. S. Pat. No. 4,452,950; United Kingdom publication No. 2,134,909A; Bywater et al., J. Poly. Sci. Poly. Chem. Ed., Vol. 22, 669-672 (1984); Halasa et al., J. Poly. Sci. Poly. Chem. Ed., Vol. 19, 1357-1360 (1981); Aukett et al., J. Oil Col. Chem. Assoc., Vol. 60, 173-180 (1977); and Antkowiak et al., J. Poly. Sci., Part A-1, Vol. 10, 1319-1334 (1972).

In addition to the claimed block copolymer, backside coatings of the present invention may optionally include various additives to enhance the performance of the backside coating. The use of such additives is well known in the art and includes, for example, lubricants, antioxidants, surfactants, head cleaning agents, fungicides, bactericides, antistatic agents, and the like.

According to a preferred method of preparing backside coatings of the present invention, all of the ingredients of the backside coating, except for the carbon black (if any), are combined with a solvent or solvent blend and then mixed thoroughly at high speed, e.g., 1500 rpm, for a time in the range from about 30 minutes to about 5 hours. The carbon black, if any is used, is slowly combined with the other ingredients during such mixing. Generally, the solvent or solvent blend preferably is used in an amount such that the backside dispersion contains 70 to 90 weight percent of the solvent or solvent blend.

By appropriate choice of the solvent, or solvent blend, the surface roughness of the backside coating can be easily controlled. To prepare a backside coating in which the coated copolymer has a smooth surface, a single solvent can be used. For example, for copolymers containing 40 weight percent or more of polystyrene, a coating solvent such as toluene or xylene could be used to prepare a smooth, coated copolymer. For copolymers containing 60 weight percent or more of polybutadiene or polyisoprene, an ether solvent such as THF or diglyme ether could be used to produce a smooth, coated copolymer.

On the other hand, to prepare a backside coating in which the coated polymer has a plurality of integral protuberances for providing a rough texture, an appropriate solvent blend may be used. Generally, suitable solvent blends comprise 1 to 20 parts by weight of a first solvent that preferentially dissolves the A segment of the copolymer and 1 to 20 parts by weight of a second solvent that preferentially dissolves the B block of the copolymer. For example, for copolymers in which A is a polystyrene segment and B is a polybutadiene or polyisoprene segment, a suitable first solvent may be selected from toluene, xylene, and the like; and a suitable second solvent may be selected from THF, diglyme ether, and the like.

Preferably, for polystyrene/polybutadiene or polystyrene/polyisoprene copolymers containing about 40 weight percent or more of polystyrene, the solvent blend comprises major amounts of the first solvent. On the other hand, for polystyrene/polybutadiene or polystyrene/polyisoprene copolymers containing less than about 40 weight percent polystyrene, the solvent blend preferably comprises major amounts of the second solvent. For purposes of the present invention, "major amount" means that the solvent blend contains more than 50 weight percent of the particular solvent.

After mixing, the resulting mixture is milled at high speed, e.g., 1500 rpm, for 2 to 30 hours to form a backside dispersion. The milling media to be used for milling may be any suitable milling media known in the art, e.g., glass, stainless steel, or ceramic media. Likewise, the particular apparatus to be used for milling is not critical. As one example, a water-jacketed Igarashi mill using a milling blade with flights has been found to be suitable in the practice of the present invention. After milling, when a backside coating with integral protuberances is desired, additional solvent optionally may be added to the backside dispersing to adjust the weight ratio of the first solvent to the second solvent as desired. Generally, using greater amounts of the second solvent provides a backside coating with more protuberances.

After milling, the backside dispersion may be passed through a sieve in order to separate the backside dispersion from the milling media. The backside dispersion may then be applied to the nonmagnetic support using any conventional coating technique, such as gravure, reverse gravure, or knife coating techniques. After coating the backside dispersion onto the nonmagnetizable support, the coating on the nonmagnetizable support is air dried under ambient conditions, whereby a backside coating on the nonmagnetizable substrate is formed. When a suitable solvent blend is used to prepare the backside coating, protuberances that are integral with the block copolymer form on the surface of the backside coating as the coated dispersion dries.

The invention will now be further illustrated by the following examples.

<u>Example 1</u>

Preparation of Block Copolymer of the Present Invention

475 lbs. (215 kg) cyclohexane was charged to a 75 gallon (284 l) stainless steel pressure vessel. 20 lbs. (9.1 kg) cyclohexane was distilled off. The vessel was cooled to 105°F (40.6°C) and isolated under an inert atmosphere. 45.0 lbs. (20 kg) styrene was charged through silica gel into the vessel. About 200 ml of 12% s-Butyl lithium solution in cyclohexane was added in 50 ml portions until an exotherm was detected and the solution showed a pale yellow color. Immediately, 0.8 lbs. (0.3 kg) of 12% s-butyl lithium solution in cyclohexane was added. After the exotherm peaked, the batch was maintained at 140°F (60°C) for 90 minutes. 45.0 lbs. (20 kg) butadiene was charged through silica gel to a 25 gallon (95 l) stainless steel pressure vessel and held at 50°F (10°C) until the end of the 90 minute hold. The batch was then cooled to 105°F (40°C) and the butadiene was pressured with inert gas from the 25 gallon (95 l) vessel into the batch in the 75 gallon (284 l) vessel. The batch was then held at 165°F for 4 hours after the exotherm peaked. The batch was cooled to 150°F (65.6°C) and then 1.6 lbs. (0.73 kg) of silica gel-treated, 55% divinyl benzene was added to the batch. The batch was maintained at 150°F (65.6°C) for 2 hours and then quenched with 0.08 lbs. (0.036 kg) methanol. 0.9 lbs. (0.4 kg) Irganox[TM]1076 antioxidant was added to the batch.

GPC results of the final polymer and intermediate samples showed that the styrene block had a molecular weight of 28,000 and a number average molecular weight of 28,000 and a number average molecular weight of 26,900; the styrene-b-butadiene arm had a corrected weight average molecular weight (butadiene Q factor 28) of 65,500 and a corrected number average weight (butadiene Q factor 28) of 63,000; and the coupled block copolymer had a corrected weight average molecular weight (butadiene Q factor 28) of 582,950 and a corrected number average weight (butadiene Q factor 28) of 561,600. The polymer was prepared for use by slowly adding one part of the above solution to three parts 2-propanol with vigorous stirring. The resulting precipitated, stiff plastic polymer was dried in a vacuum oven before use. The styrene block of the resulting copolymer had a $T_g$ of about 97°C, and the butadiene block of the copolymer had a $T_g$ of about -65°C.

Example 2

Preparation of Backside Coatings

A backside coating was prepared from the following ingredients:

| Ingredient | Weight in grams |
| --- | --- |
| Acetylene Carbon Black* | 30.97 |
| Phosphorylated polyoxyalkyl polyol | 0.83 |
| Emcol Acetate | 0.93 |
| (Witco Chemical, Organics Division) | |
| Polymer solution containing: | |
|     a. Block copolymer of Example 1 | 47.4 |
|     b. Toluene | 238 |
| Tetrahydrofuran | 201 |

* 42 nm mean particle diameter.

First, the polymer solution and the tetrahydrofuran were combined and mixed for about 5 minutes at 1500 rpm using a high shear blade. The carbon black, the phosphorylated polyoxyalkyl polyol, and then the Emcol Acetate were slowly added, sequentially, while mixing. After adding all of the ingredients, the mixture was mixed for 2 hours at 1500 rpm. Next, 350 grams of 1.3 mm glass milling media were added, and the mixture was milled at 1500 rpm for 25 hours using milling flights. The weight ratio of toluene to THF in the resulting dispersion was 55:45.

One aliquot of the resulting dispersion (Sample 2A) was knife coated onto a 1.5 mil polyester film, air dried, and then calendered at 130°F and 1500 PLI. To another aliquot of the resulting dispersion (Sample 2B), enough THF was added such that the weight ratio of toluene to THF was adjusted to 40:60. The Sample 2B dispersion was then knife coated onto a 1.5 mil (0.038 mm) polyester film, air dried, and then calendered at 130°F (54.4°C) and 1500 PLI.

Example 3

A backside coating was prepared from the following ingredients:

| Ingredient | Weight in grams |
| --- | --- |
| Acetylene Carbon Black* | 30.97 |
| Phosphorylated polyoxyalkyl polyol | 0.95 |
| Emcol Acetate | 0.93 |
| (Witco Chemical, Organics Division) | |
| Block copolymer of Example 1 | 47.4 |
| (100% solids) | |
| Toluene | 0 |
| Tetrahydrofuran | 460 |

* 42 nm mean particle diameter.

All of the ingredients, except for the carbon black, were combined and mixed for about 5 minutes using a high shear blade. The carbon black was then slowly added while mixing. After adding the carbon black, the mixture was mixed for 2 hours at 1500 rpm. Next, 350 grams of 1.3 mm glass milling media were added, and the mixture was milled at 1500 rpm for 5 hours using milling flights. The resulting dispersion contained no toluene.

One aliquot of the resulting dispersion (Sample 3A) was knife coated onto a 1.5 mil polyester film, air dried, and then calendered at 130°F at 1500 PLI. To two other aliquots of the resulting dispersion (Samples 3B and 3C, respectively), enough toluene was added to each such sample such that the weight ratio of toluene to THF was 19:81 for Sample 3B and 10:90 for Sample 3C. Each of Samples 3B and 3C was then knife coated onto a 1.5 mil (0.038 mm) polyester film, air dried, and then calendered at 130°F (54.4°C) and 1500 PLI.

Example 4

This Example describes the preparation of a backside coating derived from a block copolymer comprising only 25 weight percent butadiene.

475 lbs. (215 lbs.) cyclohexane was charged to a 75 gallon (284 l) stainless steel pressure vessel. 20 lbs. (9.1 kg) cyclohexane was then distilled off. The vessel was cooled to 105°F (40.6°c) and isolated under an inert atmosphere. 67.5 lbs. (30.6 kg) styrene was charged through silica gel into the vessel. About 200 ml of 12% s-Butyl lithium solution in cyclohexane was added in 50 ml portions until an exotherm was detected and the solution showed a pale yellow color. Immediately, 0.8 lbs. (0.3 kg) of 12% s-butyl lithium solution in cyclohexane was added. After the exotherm peaked, the batch was maintained at 140°F (60°c) for 90 minutes. 22.5 lbs. (10.2 kg) butadiene was charged through silica gel to a 25 gallon (95 l) stainless steel pressure vessel and held at 50°F (10°C) until the end of the 90 minute hold. The batch was then cooled to 105°F (40.5°C) and the butadiene was pressured into the batch in the 75 gallon (284 l) vessel with inert gas. The batch was held at 165°F (73.9°C) for 4 hours after the exotherm peaked. The batch was cooled to 150°F (65.6°C) and then 1.6 lbs. (0.73 kg) of silica gel treated, 55% divinyl benzene was added to the batch. The batch was maintained at 150°F (65.6°C) for 2 hours and then quenched with 0.08 lbs. (0.036 kg) methanol. 0.9 lbs. (0.4 kg) Irganox™1076 antioxidant was added to the batch.

GPC results of the final polymer and intermediate samples showed that the styrene block had a weight average molecular weight of 50,000, and a number average molecular weight of 46,8000; the styrene-b-butadiene arm had a corrected weight average molecular weight (butadiene Q factor 28) of 67,300 and a corrected number average weight (butadiene Q factor 28) of 61,900; and the coupled block copolymer had a corrected weight average molecular weight (butadiene Q factor 28) 585,500 and a corrected number average weight (butadiene Q factor 28) of 538,500. The polymer was prepared for use by slowly adding one part of the above solution to three parts 2-propanol with vigorous stirring. The resulting precipitated, stiff plastic polymer dried in a vacuum oven before use. The styrene block of the resulting copolymer had a $T_g$ of about 97°C, and the butadiene block of the copolymer had a $T_g$ of about -65°C. The resulting block polymer was thereafter dissolved at 16.6% solids in toluene.

A backside coating was prepared using the resulting polymer solution and additional ingredients as follows:

| Ingredient | Weight in grams |
|---|---|
| Acetylene Carbon Black* | 30.97 |
| Phosphorylated polyoxyalkyl polyol | 1.24 |
| Emcol Acetate | 4.5 |
| (Witco Chemical, Organics Division) | |
| Polymer solution containing: | |
|     a. Block copolymer of this Example | 48 |
|     b. Toluene | 242 |
| Tetrahydrofuran | 265 |

\* 42 nm mean particle diameter.

All of the ingredients, except for the carbon black, were combined and mixed for about 5 minutes using a high shear blade. The carbon black was then slowly added while mixing. After adding the carbon black, the mixture was mixed for 2 hours at 1500 rpm. Next, 350 grams of 1.3 mm glass milling media were added, and the mixture was milled at 1500 rpm for 25 hours using milling flights. The weight ratio of toluene to THF in the resulting dispersion was 48:52.

An aliquot of the resulting dispersion (Sample 4A) was knife coated onto a 1.5 mil (0.038 mm) polyester film, air dried, and then calendered at 130°F (54.4°C) at 1500 PLI. The resulting backside coating was smooth and had substantially no protuberances.

Example 5

The 45° gloss values and air bleed times of Samples 2A, 2B, 3A, 3B, 3C, and 4A were measured. As known in the art, air bleed time can be used to measure the surface roughness of a coating. See, e.g., U.S. Pat. No. 4,698,701; JP62-117138 (A) ; and JP83-000096 (B). Generally, a lower air bleed time corresponds to a rougher coating. The results were as follows:

| Sample | Weight Ratio of toluene to THF | 45° Gloss | Air bleed time (seconds) |
|--------|-------------------------------|-----------|--------------------------|
| 2A | 55:45 | 1.0 | 5 |
| 2B | 40:60 | 1.3 | 6 |
| 3B | 19:81 | 9.8 | 18 |
| 3C | 10:90 | 10.7 | 34 |
| 3A | 0 | 11.7 | 470 |
| 4A | 48:52 | 20.0 | 320 |

For Samples 2A, 2B, 3B, 3C, and 3A, the data show that the 45° gloss value and air bleed time for the samples decreases as the weight ratio of toluene to THF increases. Specifically, there is a dramatic reduction in 45° Gloss and air bleed time as toluene is combined with THF, particularly when the weight ratio of toluene to THF is in the range from 40:60 to 55:45. Because lower 45° Gloss value and lower air bleed time correspond to a rougher surface, the data indicate that using a solvent blend of toluene and THF provides a backside coating with a rougher surface than does using THF by itself. It is believed that Sample 4A was apparently smoother than the other samples because of the high styrene content of Sample 4A.

Example 6

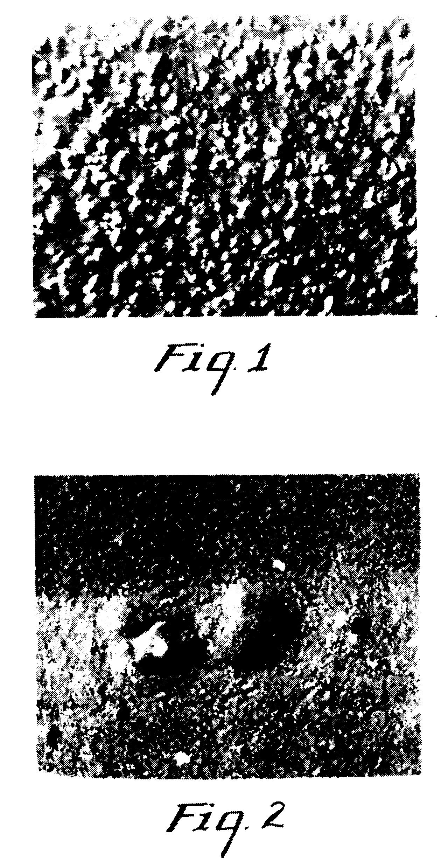

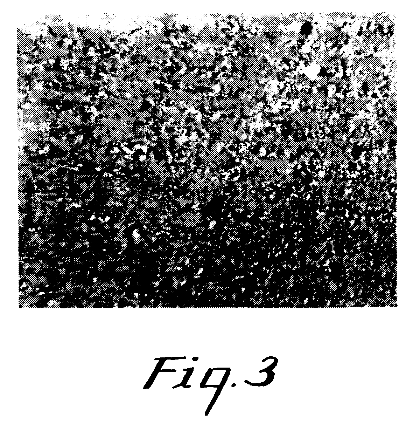

Optical photomicrographs of Samples 2A and 3A, and 3C were taken at a magnification of 100X. FIG. 1 shows Samples 2A, FIG. 2 shows Sample 3C, and FIG. 3 shows 3A. As seen from FIG's. 1-3, the samples have surface characteristics as follows:

| Sample | FIG. | weight ratio of toluene to THF | Protuberances |
|--------|------|-------------------------------|---------------|
| Sample 2A | 1 | 55:45 | yes |
| Sample 3C | 2 | 10:90 | yes |
| Sample 3A | 3 | 0 | no |

Thus, the backside coatings of the present invention prepared using a solvent blend of toluene and THF have protuberances which are formed from portions of the block copolymer, and these protuberances project from the surface of the backside coating. In contrast, the backside coating prepared using only THF as the solvent has no protuberances.

The protuberances impart a rough texture for reducing air entrapment during tape transport. Advantageously, it is believed that the protuberances, because they are integral with the copolymer, would show less of a tendency to damage the magnetizable layer relative to protuberances formed by hard, relatively large particles such as $Al_2O_3$ or carbon black.

Example 7

475 lbs. (215 kg) cyclohexane was charged to a 75 gallon (284 l) stainless steel pressure vessel. 20 lbs. (9.1 kg) cyclohexane was distilled off. The vessel was cooled to 105°F (40.6°C) and isolated under an inert atmosphere. 61.2 lbs. (27.8 kg) styrene was charged through silica gel into the vessel. About 0.2 lbs. (0.09 kg) of 12% by weight s-Butyl lithium solution in cyclohexane was added in 0.05 lb (0.023 kg) portions until an exotherm was detected and the solution showed a pale yellow color. Immediately, 0.8 lbs. (0.36 kg) 12% by weight s-butyl lithium solution in cyclohexane was added. After the exotherm peaked, the batch was maintained at 140°F (60°C) for 90 minutes. 28.8 lbs. (13.1 kg) isoprene was charged through silica gel to a 25 gallon (95 l) stainless steel pressure vessel, and held at 50°F (10°C) until the end of the 90 minute hold. The batch was then cooled to 105°F (40.6°C) and the isoprene was pressured into the polystyrene solution in the 75 gallon (284 l) vessel with inert gas. The batch was held at 165°F for 4 hours after the exotherm peaked. The batch was cooled to 150°F (65.6°C) and then 1.6 lbs. (0.73 kg) of silica gel treated 55% divinyl benzene was added to the batch. The batch was maintained at 150°F (65.6°C) for 2 hours and then quenched with 0.08 lbs. (0.036 kg) methanol. 0.9 lbs. (0.4 kg) Irganox[TM] 1076 antioxidant was added to the batch.

GPC results of the final polymer and intermediate samples showed that the styrene block had a weight average molecular weight of 31,800, and a number average molecular weight of 29,500; the styrene-b-isoprene arm had a corrected weight average molecular weight (isoprene Q factor) of 47,300 and a corrected number average weight (isoprene Q factor 30) of 44,100; and the coupled block copolymer had a corrected weight average molecular weight (isoprene Q factor 30) of 337,400 and a corrected number average weight (isoprene Q factor 28) of 314,500.

To prepare the copolymer for use, the batch was heated to 130-140°F (54-60°C), and a vacuum was applied to the reactor until about 200 lbs. (90.7 kg) cyclohexane was distilled from the batch. 200 lbs. (90.7 kg) toluene was added to the batch. The distillation contained as above until about 200 lbs. (90.7 kg) cyclohexane/toluene was removed. The percent residual cyclohexane was determined by gas chromatography. The solvent inversion was repeated until the residual cyclohexane was 1% or less. The weight percent solids was adjusted to 15-30% with toluene.

Example 8

A backside coating was prepared from the following ingredients:

| Ingredient | Parts by Weight |
| --- | --- |
| Acetylene Carbon Black (42 nm mean particle diameter) | 100.0 |
| Alumina | 9.2 |
| Polyamine/Polyester Dispersant* | 6.0 |
| Polymer solution containing: | |
| a. Block copolymer of Example 7 | 147.9 |
| b. Toluene | 543.1 |
| Toluene | 869.0 |

* commercially available as Hypermer MT-1 from ICI Specialty Chemicals, Leatherhead, UK.

All of the ingredients were combined and milled in a horizontal media mill for 8 hours using 0.8-1.0 mm ceramic milling media containing zirconia. After milling, various solvents were added to different portions (Samples 8A, 8B, 8C, 8D, 8E, 8F, and 8G, respectively) of the milled dispersion. After adding such additional solvents, the resulting samples were coated onto a 56 gauge polyethylene terephthalate ("PET") film using a manual knife coater at a thickness of 5 microns. The coatings were left to dry under ambient conditions. The air bleed time for each sample was then measured. The results are shown in the following table.

| Sample | Solvent Added | Weight percent of solvent added* | Air bleed time (seconds) |
| --- | --- | --- | --- |
| 8A | none | 0 | 221 |
| 8B | toluene | 5% | 238 |
| 8C | toluene | 10% | 203 |
| 8D | cyclohexanone | 5% | 266 |
| 8E | cyclohexanone | 10% | 227 |
| 8F | THF | 5% | 85 |
| 8G | THF | 10% | 100 |

*The weight percent of solvent added is based on the weight of solvent in the original dispersion.

These results show that addition of THF to the dispersion significantly increased the roughness of the backside coating.

The 75° gloss of samples 8A, 8F, and 8G were also measured using a 75° Novo-gloss (Rhopoint, Ltd.) hand-held device. The results are shown in the following table:

| Sample | Solvent Added | Weight percent of solvent added* | 75° Gloss |
| --- | --- | --- | --- |
| 8A | none | 0 | 55 |
| 8F | THF | 5% | 40 |
| 8G | THF | 10% | 34 |

*The weight percent of solvent added is based on the total weight of solvent in the original dispersion.

The reduction in gloss of Samples 8F and 8G clearly demonstrates the increase in surface roughness caused by adding THF to the milled dispersion.

## Example 9

The procedure of Example 8 was followed except an alternative ether solvent, diglyme ether (boiling point 162°C) was used as the additional solvent instead of toluene, cyclohexanone, or THF. The air bleed times of the resultant samples are shown in the following table:

| Sample | Solvent Added | Weight percent of solvent added* | Air bleed time (seconds) |
|---|---|---|---|
| 8A | none | 0 | 222 |
| 9B | diglyme ether | 10% | 164 |
| 9C | diglyme ether | 20% | 138 |
| 9D | diglyme ether | 30% | 121 |

*The weight percent of solvent added is based on the total weight of solvent in the original dispersion.

The data shows that the alternative ether solvent, diglyme ether can be used to lower the air bleed time of the backside coating. We have also observed that the air bleed time of a sample can be further reduced by adding the additional solvent under high-shear conditions. For example, when 20% diglyme ether was added under high-shear conditions, the resultant backside coating (Sample 9E) showed an air bleed time 17% lower than Sample 9C.

## Example 10

A backside coating was prepared in accordance with Example 8, except the following ingredients were used:

| Ingredient | Parts by Weight |
|---|---|
| Acetylene Carbon Black (42 nm mean particle diameter) | 100.0 |
| Alumina | 9.2 |
| Hypermer MT-1 dispersant | 6.0 |
| Kraton G1650 copolymer (100% solids)* | 147.9 |
| THF | 1416.5 |

* Kraton G1650 commercially available from Shell Chemical Co. is a linear block copolymer containing 29% styrene and 71% hydrogenated butadiene.

Various amounts of toluene were added to different portions of the milled dispersion before coating the dispersions onto PET film. Air bleed times of the resultant coatings were measured, and the results are shown in the following table:

| Sample | Solvent Added | Weight percent of solvent added* | Air bleed time (seconds) |
|---|---|---|---|
| 10A | none | 0 | 328 |
| 10B | toluene | 5% | 294 |
| 10C | toluene | 10% | 187 |

*The weight percent of solvent added is based on the total weight of solvent in the original dispersion.

This data shows that adding toluene to the dispersion significantly increased the surface roughness of the resultant coating.

## Claims

1. A magnetic recording medium comprising a nonmagnetic support having opposed first and second major surfaces, a magnetizable coating on said first major surface, and a backside coating on said second major surface, wherein the backside coating has a plurality of protuberances and comprises a block copolymer of the formula

$$(A\text{-}B)_n\text{-}Y,$$

wherein :

.   Y is a multifunctional coupling moiety ;

- n has a number average value of 2 to 15 ;
- A is a polymeric block having a $T_g$ of less than about 70°C ; and B is a polymeric block having a $T_g$ of less than about 25°C, $T_g$ being measured by differential scanning colorimetry.
- the molecular weight of A is in the range from 10,000 to 70,000 ;
- the molecular weight of B is in the range from 15,000 to 75,000 ;
- each (A-B) contains 30 to 80 % by weight A ; and
- A and B blocks phase separate when free of solvent and said protuberances are formed from portions of the block copolymer.

2. The magnetic recording medium of claim 1, wherein Y is derived from divinylbenzene.

3. The magnetic recording medium of claim 1, wherein A is a polystyrene block.

4. The magnetic recording medium of claim 1, wherein B is polybutadiene block.

**Patentansprüche**

1. Magnetisches Aufzeichnungsmedium, umfassend einen nichtmagnetischen Träger mit einer ersten und zweiten Hauptoberfläche, die einander gegenüberliegen, eine magnetisierbare Beschichtung auf der ersten Hauptoberfläche und eine Rückseitenbeschichtung auf der zweiten Hauptoberfläche, wobei die Rückseitenbeschichtung eine Vielzahl von Vorsprüngen aufweist und ein Blockcopolymer der Formel

$$(A-B)_n-Y$$

umfaßt, wobei

- Y eine multifunktionelle Kopplungsstruktureinheit ist,
- n ein Zahlenmittel von 2 bis 15 hat,
- A ein polymerer Block mit einem $T_g$ von weniger als etwa 70°C ist und B ein polymerer Block mit einem $T_g$ von weniger als etwa 25°C ist, wobei $T_g$ durch Differential-Scanning-Calorimetrie gemessen wird,
- das Molekulargewicht von A im Bereich von 10 000 bis 70 000 liegt;
- das Molekulargewicht von B im Bereich von 15 000 bis 75 000 liegt;
- jedes (A-B) 30 bis 80 Gew.-% A enthält und
- die Blöcke A und B eine Phasentrennung erfahren, wenn sie frei von Lösungsmittel sind, und die Vorsprünge von Teilen des Blockcopolymers gebildet werden.

2. Magnetisches Aufzeichnungsmedium gemäß Anspruch 1, wobei Y von Divinylbenzol abgeleitet ist.

3. Magnetisches Aufzeichnungsmedium gemäß Anspruch 1, wobei A ein Polystyrolblock ist.

4. Magnetisches Aufzeichnungsmedium gemäß Anspruch 1, wobei B ein Polybutadienblock ist.

**Revendications**

1. Milieu d'enregistrement magnétique comprenant un support non magnétique ayant une première surface et une seconde surface principales opposées, un revêtement magnétisable sur ladite première surface principale et un revêtement d'envers sur ladite seconde surface principale, dans lequel le revêtement d'envers comporte une pluralité de protubérances et comprend un polymère séquencé de formule

$$(A-B)_n-Y,$$

dans laquelle

- Y est un fragment multifonctionnel de couplage;

- n a une valeur numérique moyenne allant de 2 à 15 ;
- A est une séquence polymère ayant une $T_g$ inférieure à environ 70°C; et B est une séquence polymère ayant une $T_g$ inférieure à environ 25°C, la $T_g$ étant mesurée par analyse thermique différentielle;
- la masse moléculaire de A est dans la plage allant de 10 000 à 70 000;
- la masse moléculaire de B est dans la plage allant de 15 000 à 75 000;
- chaque (A-B) contient de 30 à 80 % en poids de A; et
- les séquences A et B se séparent en phases distinctes lorsqu'elles sont exemptes de solvant, et lesdites protubérances sont formées à partir de fractions du copolymère séquence.

2.  Milieu d'enregistrement magnétique selon la revendication 1, dans lequel Y est dérivé du divinylbenzène.

3.  Milieu d'enregistrement magnétique selon la revendication 1, dans lequel A est une séquence polystyrène.

4.  Milieu d'enregistrement magnétique selon la revendication 1, dans lequel B est une séquence polybutadiène.

*Fig. 1*

*Fig. 2*

Fig.3